# EUROPÄISCHE PATENTSCHRIFT

(11) **EP 0 678 669 B1**
(45) Veröffentlichungstag und Bekanntmachung des Hinweises auf die Patenterteilung: **10.06.1998**
(21) Anmeldenummer: 95104273.8
(22) Anmeldetag: 23.03.1995
(51) Int. Cl.: F02M 69/46, F02M 55/02, F16L 37/14

(54) **Brennstoffeinspritzeinrichtung**
Fuel injection device
Dispositif d'injection de combustible

(30) Priorität: 21.04.1994 DE 4413914
(43) Veröffentlichungstag der Anmeldung: 25.10.1995
(73) Patentinhaber: ROBERT BOSCH GMBH, 70442 Stuttgart (DE)
(72) Erfinder: Gras, Juergen, Dipl.-Ing., D-74321 Bietigheim-Bissingen (DE); Reiter, Ferdinand, Dipl.-Ing. (BA), D-71706 Markgröningen (DE); Krause, Heinz-Martin, Dipl.-Ing. (FH), D-71254 Ditzingen (DE); Naeger, Thomas, Dipl.-Ing. (FH), D-70376 Stuttgart (DE); Gandert, Volker, Dipl.-Ing. (FH), D-71706 Unterriexingen (DE)

(56) Entgegenhaltungen:
- EP-A- 0 080 603
- WO-A-90/15240
- DE-A- 3 904 479
- DE-C- 3 428 597
- FR-A- 2 117 570
- FR-A- 2 645 616

## Beschreibung

### Stand der Technik

Die Erfindung geht aus von einer Brennstoffeinspritzeinrichtung nach der Gattung des Patentanspruchs 1.

Aus der WO 90/15240 A, die den nächstkommenden Stand der Technik bildet, ist schon eine Brennstoffeinspritzeinrichtung bekannt, bei der ein Einspritzventil in einer Aufnahme eines Anschlußstutzens einer Brennstoffverteilereinrichtung mit einem Verbindungselement fixiert wird. Das Verbindungselement besitzt dabei einen scheibenförmigen Grundkörper, der eine innere Öffnung aufweist, die durch kreisbogenförmige Konturen aufweisende Schenkel begrenzt ist. Im eingebauten Zustand des Einspritzventils erstreckt sich das Einspritzventil durch die innere Öffnung des Verbindungselements, wobei die Schenkel teilweise in eine Umfangsnut des Einspritzventils eingreifen. Jeder der Schenkel weist senkrecht zum Grundkörper stehende Federbereiche mit Unterbrechungen auf. In die Unterbrechungen rutscht beim Anbringen des Verbindungselements ein am Anschlußstutzen vorgesehener Verriegelungsbund hinein. Außerdem weist das Verbindungselement zwei Fixierelemente auf, die jeweils ein am Anschlußstutzen bzw. am Einspritzventil ausgeformtes Formelement zumindest in Umfangsrichtung formschlüssig umgreifen. Das Einspritzventil wird im eingebauten Zustand durch die Schenkel des Verbindungselements nicht vollständig umgriffen.

Aus der DE- 34 28 597 C ist bereits eine Brennstoffeinspritzeinrichtung bekannt, bei der ein Verbindungsglied zur Verrastung eines Einspritzventils an einem Anschlußstutzen als U-förmige Federklammer ausgebildet ist. Diese Federklammer weist einen Steg, der quer zur Längserstreckung des Einspritzventils verläuft, und Schenkel auf, die einerseits mit am Rand radial einwärts gebogenen Lappen in eine Umfangsnut am Ventilgehäuse des Einspritzventils eingreifen und andererseits Durchbrechungen aufweisen, in die ein Verriegelungsbund am Anschlußstutzen einrastbar ist. Zur radialen Fixierung der Federklammer in der Umfangsnut des Ventilgehäuses weisen die Lappen kreisbogenförmig und konkav verlaufende Abschnitte auf, deren Radius dem der Umfangsnut entspricht. Bei der Montage wird zuerst die Federklammer auf das Einspritzventil aufgeschoben, wobei die Schenkel mit ihren Lappen in die Umfangsnut einrasten. Dann wird das Einspritzventil mit der Federklammer in den Anschlußstutzen eingeschoben. Die Schenkel der Federklammer sind nach außen abgewinkelt, damit sie über den Verriegelungsbund hinweg gleiten können. Sobald der Verriegelungsbund in die Durchbrechungen eingerastet ist, springen die Schenkel in ihre Ausgangsstellung zurück.

Eine axiale Sicherung der Einspritzventile an den Anschlußstutzen der Brennstoffverteilereinrichtung ist hierdurch gewährleistet, jedoch keine Sicherung gegen Verdrehung der Einspritzventile in Umfangsrichtung. Eine genaue Positionierung der Einspritzventile ist aber gewünscht, wenn wie bei Mehrstrahlventilen eine exakte Abspritzgeometrie eingehalten werden soll.

Bekannt ist des weiteren aus der DE- 39 19 231 A eine Brennstoffeinspritzeinrichtung, die eine Verbindung des Einspritzventils an einem Anschlußstutzen durch Einschnappen gewährleistet, wobei die Montage vergleichsweise einfach erfolgt. Die Anschlußstutzen sind dazu mit radial nach außen weisenden Verriegelungsbunden versehen, über die zur Halterung der Einspritzventile an den Einspritzventilen angebrachte Schnappfedern mit Nasen greifen. Für eine exakte Positionierung der Einspritzventile sind an dem Verriegelungsbund Fixierstege vorgesehen.

Ein Verbindungselement zum Verbinden eines Einspritzventils mit einem dazu koaxialen Anschlußstutzen ist auch aus der DE- 39 04 479 A bekannt. Das Verbindungselement ist hierbei als Kunststoffclip ausgebildet, der aus einer C-förmigen Ringscheibe mit axial verlaufenden Federstegen gebildet wird, die wiederum Rastnasen besitzen. Die Ringscheibe greift in eine Umfangsnut am Einspritzventil ein, während die Rastnasen nach koaxialem Einschieben des Einspritzventils in den Anschlußstutzen hinter einem Verriegelungsbund am Anschlußstutzen einschnappen, wobei wiederum keine vollständige Verdrehsicherung vorhanden ist.

Aus der US- 5,058,554 A sind außerdem Elemente zur Verdrehsicherung bekannt, die in der Form von Schließfedern, Federringen, Sprengringen oder ähnlichem ausgebildet sind und für eine Fixierung von Einspritzventilen an einer Brennstoffversorgungsleitung sorgen. Diese Sicherungselemente sind auch als gebogene Drahtspangen, die federnd zur Fixierung beitragen, ausgeformt.

Verbindungselemente mit Verdrehsicherungen sind des weiteren auch aus völlig anderen Gebieten bekannt, in denen Bauelemente exakt miteinander verbunden werden sollen. Bei Einspritzventilen werden auch bei Verbindungen, die zur Herstellung von elektrischen Kontakten dienen, Verbindungselemente eingesetzt, die über eine Verdrehsicherung verfügen, so wie es die EP- 0 565 867 A zeigt.

### Vorteile der Erfindung

Die erfindungsgemäße Brennstoffeinspritzeinrichtung mit den Merkmalen des Patentanspruchs 1 hat den Vorteil, daß kostengünstig eine einfach schließbare und ebenso einfach lösbare Verbindung eines Einspritzventils an einer Brennstoffversorgungs- bzw. Brennstoffverteilereinrichtung erzielbar ist. Dies wird durch ein zwei Schenkel aufweisendes Verbindungselement erreicht, die auf einer Seite durch einen Verbindungssteg miteinander verbunden sind und gegenüberliegend Elemente einer Rastverbindung aufweisen. Mit dem erfindungsgemäßen Verbindungselement wird eine sehr präzise Lagefixierung des Einspritzventils in axialer Richtung an der Brennstoffversorgungs- bzw. Brennstoffverteilereinrichtung gewährleistet. Besonders vorteilhaft ist die sehr gute und einfache Handhabung des Verbindungselements, wobei die Rastverbindung des Verbindungselements mit Handkraft geöffnet und geschlossen werden kann, womit eine gute Austauschbarkeit erreicht wird.

Durch die in den abhängigen Ansprüchen aufgeführten Maßnahmen sind vorteilhafte Weiterbildungen und Verbesserungen der im Patentanspruch 1 angegebenen Brennstoffeinspritzeinrichtung möglich.

Besonders vorteilhaft ist es, das Verbindungselement als kostengünstigen Kunststoffclip auszuführen, wobei der Kunststoffclip z. B. ein Kunststoffspritzgußteil ist. Das Verbindungselement sorgt für eine Geräuschminimierung an der Brennkraftmaschine, die sich durch die Verwendung von Kunststoff ergibt, wobei gerade dadurch ein optimaler Formschluß des Verbindungselements und des Einspritzventils garantiert werden kann.

Von besonderem Vorteil ist es, daß bereits durch eine am Einspritzventil vorgesehene umlaufende Nut, die allerdings nicht vollständig kreisförmig verläuft, sondern eine Abflachung besitzt, eine eindeutige Einbaulage des Verbindungselements, das ebenfalls eine von einer Kreisform abweichende Abflachung hat, gegeben ist. Eine Verdrehsicherheit des Verbindungselements in Umfangsrichtung am Einspritzventil ist somit auf sehr einfache Art und Weise bereits garantiert, die insbesondere bei Mehrstrahleinspritzventilen bedeutsam ist.

### Zeichnung

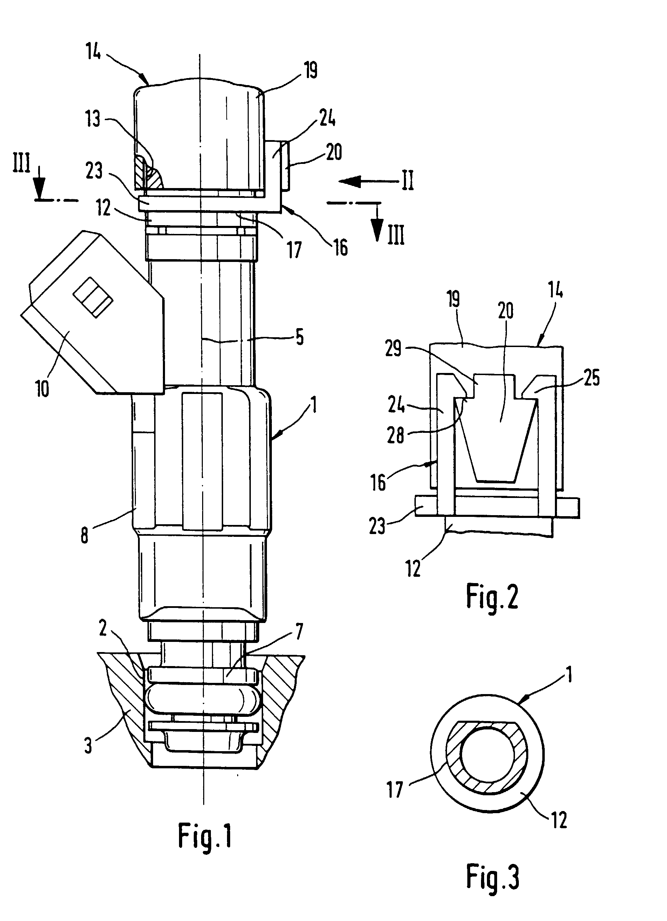

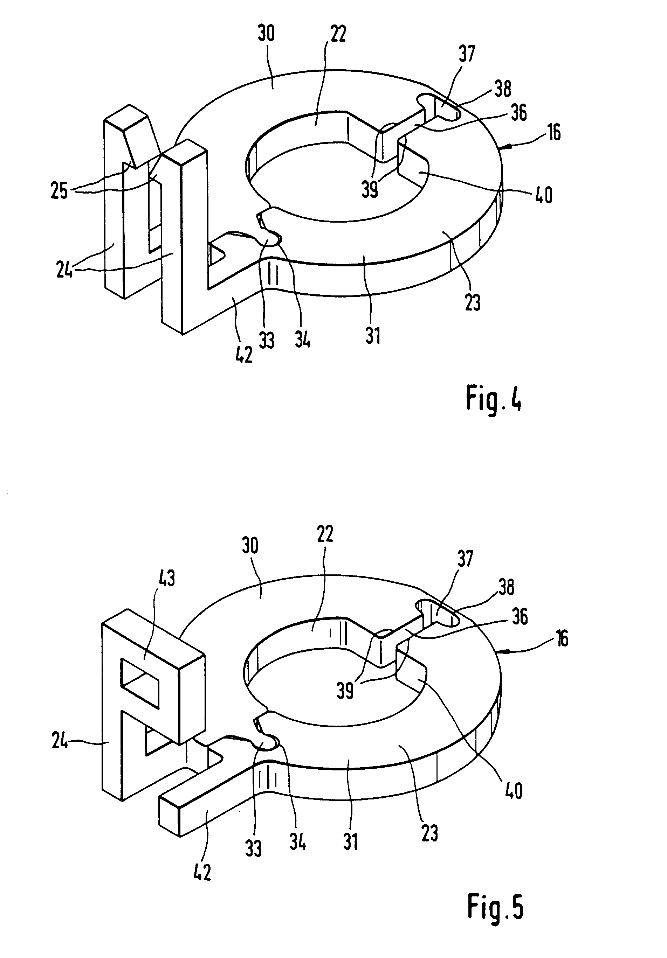

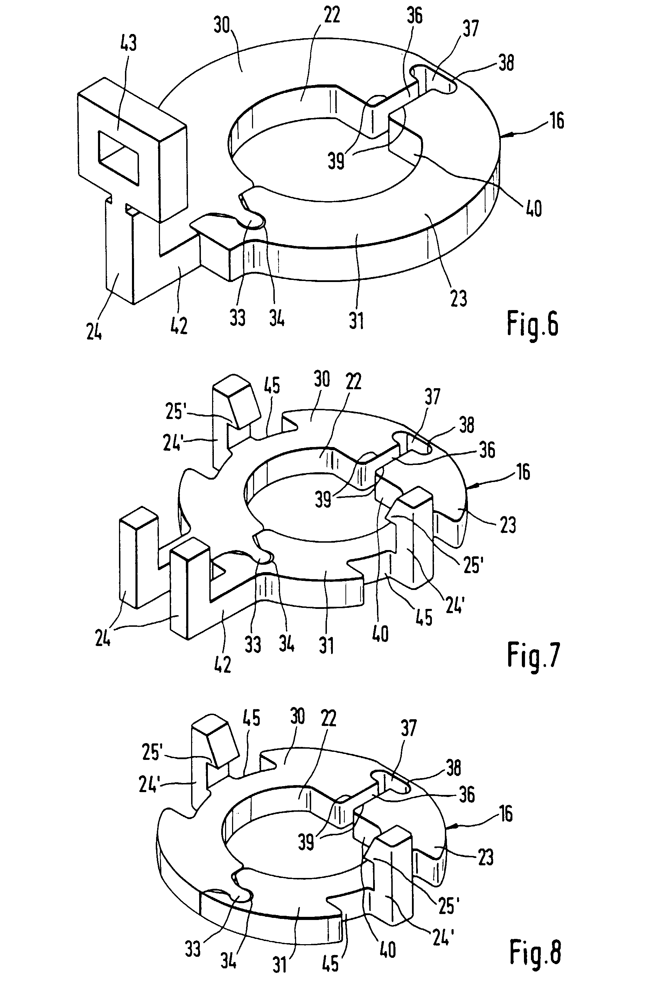

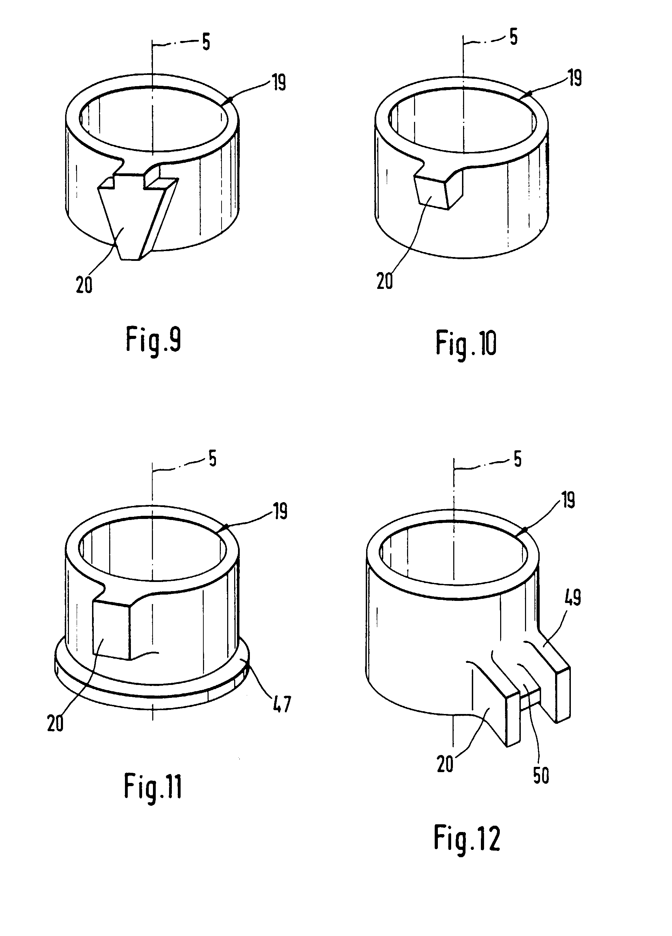

Ausführungsbeispiele der Erfindung sind in der Zeichnung vereinfacht dargestellt und in der nachfolgenden Beschreibung näher erläutert. Es zeigen Figur 1 eine erfindungsgemäße Brennstoffeinspritzeinrichtung, Figur 2 einen Ausschnitt einer Seitenansicht des Einspritzventils als Blick entlang der Linie II in Figur 1, Figur 3 einen Schnitt entlang der Linie III-III in Figur 1 ohne Verbindungselement, Figur 4 ein erstes Ausführungsbeispiel eines Verbindungselements, Figur 5 ein zweites Ausführungsbeispiel eines Verbindungselements, Figur 6 ein drittes Ausführungsbeispiel eines Verbindungselements, Figur 7 ein viertes Ausführungsbeispiel eines Verbindungselements, Figur 8 ein fünftes Ausführungsbeispiel eines Verbindungselements, Figur 9 ein erstes Ausführungsbeispiel einer Fixiernase an einem Anschlußstutzen, Figur 10 ein zweites Ausführungsbeispiel einer Fixiernase, Figur 11 ein drittes Ausführungsbeispiel einer Fixiernase und Figur 12 ein viertes Ausführungsbeispiel einer Fixiernase.

### Beschreibung der Ausführungsbeispiele

Die in der Figur 1 beispielsweise dargestellte Einrichtung zur Einspritzung von Brennstoff mit einem Einspritzventil 1 ist in einer Einspritzventilaufnahme 2 eines Saugrohres 3 einer nicht näher dargestellten Brennkraftmaschine montiert. Das Einspritzventil 1 erstreckt sich dabei entlang einer Ventillängsachse 5. Außerhalb des in die Einspritzventilaufnahme 2 des Saugrohres 3 ragenden stromabwärtigen Ventilendes 7 ist das Einspritzventil 1 weitgehend mit einer Kunststoffumspritzung 8 umschlossen. Zu dieser Kunststoffumspritzung 8 gehört beispielsweise ein mitangespritzter elektrischer Anschlußstecker 10.

An seinem zulaufseitigen, stromaufwärtigen Ende 12 ist das Einspritzventil 1 so ausgestaltet, daß es in eine Aufnahme 13 einer beispielsweise mehrere Aufnahmen 13 aufweisenden und nur teilweise dargestellten Brennstoffverteilereinrichtung 14 eingeschoben werden kann. Das Einspritzventil 1 besitzt also an seinem Ende 12 einen geringeren Außendurchmesser als den Durchmesser der Aufnahme 13 der Brennstoffverteilereinrichtung 14. Eine Brennstoffverteilereinrichtung ist z.B. in der DE-OS 41 11 988 bereits gezeigt, so daß auf eine vollständige Erläuterung hier verzichtet wird. Die Brennstoff- verteilereinrichtung stellt einen langgestreckten, z.B. rohrförmigen Körper dar, der mehrere Aufnahmen für jeweils ein Einspritzventil aufweist und Mittel zur Brennstoffversorgung der Einspritzventile, wie Zulauf- und Rücklaufstutzen, besitzt. Um ein Verbindungselement 16 zur Fixierung des Einspritzventils 1 an der Brennstoffverteilereinrichtung 14 anordnen zu können, ist im Bereich des Endes 12 in der Kunststoffumspritzung 8 eine umlaufende Nut 17 vorgesehen, die eine von einer Kreisform abweichende Gestalt zumindest in einem Teilbereich besitzt (Figur 3).

Das Verbindungselement 16 ist in der Form einer unregelmäßigen kreisringförmigen Scheibe als Kunststoffclip ausgebildet und dient zum Verbinden des zulaufseitigen Endes 12 des Einspritzventils 1 mit der Aufnahme 13 der das Einspritzventil 1 mit Brennstoff versorgenden Brennstoffverteilereinrichtung 14. Entsprechend der Ausbildungsform des Verbindungselements 16 ist wenigstens eine über den äußeren Umfang eines die Aufnahme 13 beinhaltenden Anschlußstutzens 19 radial herausstehende Fixiernase 20 ausgestaltet. Das Verbindungselement 16 greift in die Nut 17 formschlüssig ein, da es eine innere Öffnung 22 besitzt, die von der Form her dem Nutgrund der Nut 17 entspricht. Eine Verriegelung bzw. Verrastung des in der Nut 17 befindlichen Verbindungselements 16 mit dem Anschlußstutzen 19 der Brennstoffverteilereinrichtung 14 erfolgt erst dadurch, daß zwei aus der Ebene der Nut 17 bzw. eines scheibenförmigen Grundkörpers 23 des Verbindungselements 16 herausragende, einteilig mit dem Grundkörper 23 ausgebildete und parallel zur Ventillängsachse 5 verlaufende Raststege 24 mit an deren Enden ausgeformten Schnapphaken 25 die Fixiernase 20 des Anschlußstutzens 19 zumindest teilweise umgreifen.

In den Figuren 1 und 2 ist ein erstes Ausführungsbeispiel für das erfindungsgemäße Verbindungselement 16 dargestellt. Weitere erfindungsgemäße Ausführungsbeispiele des Verbindungselements 16 zeigen die Figuren 4 bis 8, in denen die gegenüber dem in den Figuren 1 und 2 dargestellten Ausführungsbeispiel gleichbleibenden bzw. gleichwirkenden Teile durch die gleichen Bezugszeichen gekennzeichnet sind.

Die Figur 2 ist eine Seitenansicht des Anschlußstutzens 19 bzw. des am Einspritzventil 1 befestigten Verbindungselements 16 von der mit II in der Figur 1 bezeichneten Blickrichtung. Sehr gut erkennbar ist nun die Form der am Umfang des Anschlußstutzens 19 radial herausstehenden Fixiernase 20, die in ihrer Grundfläche senkrecht zur Blickrichtung hauptsächlich trapezförmig ausgebildet ist. Die beiden parallel zueinander verlaufenden Trapezseiten sind auch parallel zum Grundkörper 23 bzw. zur Nut 17 und senkrecht zur Ventillängsachse 5 ausgeformt, während die anderen beiden Trapezseiten in axialer Richtung schräg zur Ventillängsachse 5 verlaufen. Die Fixiernase 20 besitzt an der längeren der beiden parallelen Trapezseiten, die weiter stromaufwärts als die kürzere der parallelen Trapezseiten und damit der Brennstoffverteilereinrichtung 14 zugewandt liegt, Rastflächen 28, auf denen nach der Fixierung die Schnapphaken 25 des Verbindungselements 16 aufliegen. Die in ihrer Grundfläche trapezförmige Fixiernase 20 kann noch an der Seite, an der die Rastflächen 28 liegen, eine mittig angeordnete Nase 29 besitzen, die in Umfangsrichtung beispielsweise die gleiche Erstreckung wie die Fixiernase 20 an ihrer kürzeren der beiden parallelen Trapezseiten hat und die in axialer Richtung stromaufwärts so weit aus der Ebene der Rastflächen 28 herausragt, daß die Raststege 24 und die Nase 29 stromaufwärtig bündig abschließen. In Bezug auf die axiale Lagefixierung des Einspritzventils 1 hat die Nase 29 keine funktionale Bedeutung.

Die Figur 3 zeigt einen Schnitt entlang der Linie III-III in Figur 1, wobei auf die Darstellung des Verbindungselementes 16 verzichtet wird. Besonders deutlich wird hierdurch nun die Gestalt der Nut 17, die zumindest in einem Teilbereich eine von einer Kreisform abweichende Kontur besitzt.

In der Figur 4 ist nochmals das bereits in den Figuren 1 und 2 gezeigte Verbindungselement 16 als einzelnes Bauteil dargestellt. Das scheibenförmige, kreisringförmige Verbindungselement 16 wird hauptsächlich von dem aus zwei Schenkeln 30, 31 bestehenden Grundkörper 23 mit der zentralen inneren Öffnung 22 und von zumindest einem aus der Ebene des Grundkörpers 23 emporstehenden Rastelement, hier den zwei Raststegen 24 gebildet. Der Grundkörper 23 ist in geschlossenem Zustand in seiner Außenkontur weitgehend kreisförmig ausgebildet. Mit den erfindungsgemäßen Verbindungselementen 16 werden nämlich lösbare Verbindungen geschaffen, die dadurch erreicht werden, daß der erste Schenkel 30 des Grundkörpers 23 mit einer Rastnase 33 in einer schlüssellochähnlichen Rastnut 34 des zweiten Schenkels 31 einrasten und durch Kraftaufwendung aufgrund des elastischen Materials auch wieder getrennt werden kann. Um diese Aufspreizbewegung der beiden Schenkel 30, 31 des Grundkörpers 23 in dessen Erstreckungsebene gewährleisten zu können, ist um 180° versetzt von der Rastverbindung zwischen Rastnase 33 und Rastnut 34 von der inneren Öffnung 22 ausgehend zum äußeren Umfang des Grundkörpers 23 verlaufend eine Spreizöffnung 36 vorgesehen. An ihrem Öffnungsgrund 37, der sehr nahe am äußeren Umfang des Grundkörpers 23 liegt, wodurch ein schmaler Verbindungssteg 38 zwischen den beiden Schenkeln 30, 31 entsteht, besitzt die Spreizöffnung 36 in geschlossenem Zustand des Verbindungselements 16 eine wesentlich größere Breite als über ihren weiteren Verlauf. Beim Öffnen der Rastverbindung zwischen Rastnase 33 und Rastnut 34 wird zwangsläufig die Spreizöffnung 36 aufgeweitet, so daß die im geschlossenen Zustand parallel verlaufenden Öffnungsflanken 39 nun auseinanderlaufen.

Um eine eindeutige Einbaulage des Verbindungselements 16 am Einspritzventil 1 in der Nut 17 zu garantieren, ist die ansonsten kreisförmige innere Öffnung 22 im Grundkörper 23 ebenso wie die Nut 17 mit einer Abflachung 40 versehen. Nach Schließen der Rastverbindung durch das Einführen der Rastnase 33 in die Rastnut 34 durch ein Aufeinanderzubewegen der beiden Schenkel 30, 31 ist somit eine Lagefixierung des Verbindungselements 16 am Einspritzventil 1 in Umfangsrichtung durch Formschluß auf sehr einfache Art und Weise bereits garantiert.

Aus jeweils einem Schenkel 30, 31 mit weitgehend kreisförmiger Außenkontur erstreckt sich nahe der Rastnase 33 bzw. der Rastnut 34 in der Erstreckungsebene des Grundkörpers 23 radial nach außen ein Flachsteg 42, der beispielsweise einen quadratischen Querschnitt besitzt. Die Flachstege 42 sind z. B. genau so lang wie die radiale Erstreckung der Fixiernase 20 am Anschlußstutzen 19. An die Flachstege 42 schließen sich unmittelbar die senkrecht zum Grundkörper 23 und zu den Flachstegen 42 ausgebildeten beispielsweise ebenfalls einen quadratischen Querschnitt aufweisenden Raststege 24 an, die an ihren stromaufwärtigen Enden die Schnapphaken 25 besitzen. Im geschlossenen Zustand des Verbindungselements 16 verlaufen sowohl die Flachstege 42 als auch die Raststege 24 jeweils zueinander parallel und die Schnapphaken 25 aufeinanderzugerichtet.

Das in der Figur 5 dargestellte Verbindungselement 16 unterscheidet sich von dem der Figur 4 nur im Bereich des aus der Ebene des Grundkörpers 23 herausragenden Rastelements. Anstelle der zwei Raststege 24 ist bei diesem Ausführungsbeispiel nur ein Raststeg 24 vorgesehen, der sich an den Flachsteg 42 des Schenkels 30 anschließt und an seinem stromaufwärtigen Ende eine Rastöse 43 besitzt, die etwa zentral über den beiden Flachstegen 42 angeordnet ist. Die beiden Flachstege 42 verlaufen parallel zur Erstreckungsrichtung der Spreizöffnung 36 auf der gegenüberliegenden Seite des Grundkörpers 23, dabei natürlich aber nicht fluchtend. Die Rastöse 43 kann in beliebiger Form ausgebildet sein; sie ist allerdings selbstverständlich abhängig von der Form der Fixiernase 20 des Anschlußstutzens 19. So muß beispielsweise aufgrund einer rechteckförmigen Fixiernase 20 auch die Öffnung der Rastöse 43 rechteckförmig ausgeformt sein, damit nach dem Einführen der Fixiernase 20 in die Rastöse 43 die Verdrehsicherheit voll gewährleistet ist.

Auch in der Figur 6 ist ein Ausführungsbeispiel eines Verbindungselements 16 dargestellt, bei dem nur ein Raststeg 24 zum Einsatz kommt. Allerdings ist nun auch nur ein Flachsteg 42 ausgeführt, der wiederum von dem Schenkel 30 ausgeht und in den senkrecht zum Flachsteg 42 verlaufenden Raststeg 24 übergeht. An dessen stromaufwärtigem Ende ist wiederum eine Rastöse 43 vorgesehen, die mittig auf dem Raststeg 24 sitzt. Da der Flachsteg 42 fluchtend mit der Erstreckungsrichtung der Spreizöffnung 36 verläuft, befindet sich auch die Öffnung der Rastöse 43 zentral über einer gedachten Verlängerung der Spreizöffnung 36 mit einem radialen Abstand vom Grundkörper 23, der der Länge des Flachstegs 42 entspricht.

In den Figuren 7 und 8 sind zwei Ausführungsbeispiele dargestellt, die das Rastelement nicht nahe der Rastverbindung von Rastnase 33 und Rastnut 34 besitzen, sondern um jeweils 90° versetzt am Umfang der beiden Schenkel 30, 31 des Grundkörpers 23. Der Grundkörper 23 besitzt dazu in den um 90° sowohl von der Spreizöffnung 36 als auch von der Rastverbindung mit Rastnase 33 und Rastnut 34 entfernt liegenden Bereichen an dessen Umfang Vertiefungen 45, die beispielsweise bis zur Hälfte der Materialbreite des Grundkörpers 23 von der Außenkontur bis zur inneren Öffnung 22 hineinreichen, wobei in der Mitte der Vertiefungen 45 jeweils ein Raststeg 24' angeordnet ist, der beispielsweise radial bis zum äußeren kreisförmigen Umfang des Grundkörpers 23 verläuft und sich axial aus der Ebene des Grundkörpers 23 stromaufwärts herauserhebt. An den stromaufwärtigen Enden der Raststege 24' sind wie im ersten Ausführungsbeispiel Schnapphaken 25' vorgesehen. Während die Raststege 24' mit ihren Schnapphaken 25' für eine axiale Lagefixierung sorgen, sind die Flachstege 42 und die Raststege 24 so ausgeführt, daß sie die Lagefixierung in Umfangsrichtung vornehmen, indem die Fixiernase 20 am Anschlußstutzen 19 zwischen den Raststegen 24 eingeklemmt wird, wie nachfolgend anhand der Figur 11 erläutert wird. Bei dem Ausführungsbeispiel in Figur 8 wird auf die Flachstege 42 und die Raststege 24 völlig verzichtet, da eine besondere Ausbildungsform der Fixiernase 20 zum Einsatz kommt, wie sie in der Figur 12 zu sehen ist.

Die in den Figuren 9 bis 12 teilweise und vereinfacht gezeigten Anschlußstutzen 19 mit verschiedenartigen Fixiernasen 20 stehen in sehr enger Beziehung zu den zuvor beschriebenen Verbindungselementen 16. Der in der Figur 9 dargestellte Anschlußstutzen 19 mit der trapezförmigen Fixiernase 20 ist bereits vom ersten Ausführungsbeispiel bekannt, das in den Figuren 1 und 2 gezeigt ist. Bei einer solchen Ausbildung der Fixiernase 20 ist es zweckmäßig, die Verrastung bzw.

Lagefixierung des Einspritzventils 1 gegenüber der Brennstoffverteilereinrichtung 14 in axialer Richtung und in Umfangsrichtung mit dem in Figur 4 dargestellten Verbindungselement 16 vorzunehmen. Die Schnapphaken 25 sorgen für die axiale Fixierung, während die Raststege 24 zur Verdrehfixierung beitragen.

Die Verbindungselemente 16 in den Figuren 5 und 6 sind besonders geeignet, um an Anschlußstutzen 19 mit Fixiernasen 20, wie sie in Figur 10 dargestellt ist, eingesetzt zu werden. Die beispielsweise im Querschnitt rechteckförmige Fixiernase 20 wird in die ebenfalls rechteckförmige Öffnung der Rastöse 43 eingeführt, womit sowohl eine axiale Lagefixierung als auch eine Fixierung gegen Verdrehung erreicht wird.

Wenn am Anschlußstutzen 19 ein flanschähnlicher Bund 47 ausgebildet ist, so wie es die Figur 11 zeigt, ist es besonders zweckmäßig, ein Verbindungselement 16 zu verwenden, so wie es in der Figur 7 dargestellt ist. Die Raststege 24' am Verbindungselement 16 sind so ausgeführt, daß sie radial den Bund 47 umgeben, wobei die Schnapphaken 25' den Bund 47 an dessen stromaufwärtiger Seite hintergreifen, so daß ein axiales Verrutschen des Einspritzventils 1 gegenüber der Brennstoffverteilereinrichtung 14 ausgeschlossen ist. Die beispielsweise rechteckförmige Fixiernase 20 wird zwischen den beiden Raststegen 24 eingeklemmt, so daß auch keine Verdrehungen möglich sind.

Die wenigstens eine Fixiernase 20 des in der Figur 12 teilweise dargestellten Anschlußstutzens 19 ist komplex ausgebildet, d. h. sie besitzt zwei äußere flache, radial nach außen zeigende, parallel zueinander verlaufende Nasenflanken 49, zwischen denen eine flache Zunge 50 liegt, die eine weniger große radiale Ausdehnung hat als die Nasenflanken 49. Bei einem solchen Anschlußstutzen 19 kann das in Figur 8 gezeigte Verbindungselement 16 zur Lagefixierung eingesetzt werden. Die beiden Nasenflanken 49 dienen dabei der Lagefixierung in Umfangsrichtung, da sie wenigstens einen Raststeg 24' zwischen sich einklemmen. Dagegen umgreift der Schnapphaken 25' die Zunge 50 zwischen den Nasenflanken 49, so daß auch eine axiale Sicherung vorgenommen ist.

## Patentansprüche

1. Brennstoffeinspritzeinrichtung für Brennkraftmaschinen mit einer Brennstoffverteilereinrichtung, die wenigstens einen Anschlußstutzen (19) aufweist, mit wenigstens einem Einspritzventil (1), das mit seinem zulaufseitigen, stromaufwärtigen Ende (12) in eine Aufnahme (13) des Anschlußstutzens (19) eingesetzt ist und eine Ventillängsachse (5) hat, wobei stromabwärts des Anschlußstutzens (19) am zulaufseitigen Ende (12) des Einspritzventils (1) eine umlaufende Nut (17) vorgesehen ist, in die ein Verbindungselement (16) greift, das sich mit einem Grundkörper (23) senkrecht zur Ventillängsachse (5) erstreckt und zudem wenigstens ein Rastelement (24, 24', 25, 25', 43) in Richtung der Ventillängsachse (5) hat, das wiederum zusammen mit einer am Anschlußstutzen (19) ausgeformten Fixiernase (20) als korrespondierendes Verbindungsteil eine Verrastung bzw. Verriegelung vollführt, wodurch sich eine axiale Lagefixierung des Einspritzventils (1) gegenüber dem Anschlußstutzen (19) ergibt und wobei der Grundkörper (23) des Verbindungselements (16) scheibenförmig mit einer inneren Öffnung (22) und mit zwei die Öffnung (22) umschließenden Schenkeln (30, 31) ausgebildet ist, die auf einer Seite des Grundkörpers (23) durch einen schmalen Verbindungssteg (38) miteinander verbunden sind, dadurch gekennzeichnet, daß einer der Schenkel (30) um 180° vom Verbindungssteg (38) versetzt eine Rastnase (33) und der andere der Schenkel (31) um 180° vom Verbindungssteg (38) versetzt eine Rastnut (34) aufweist, die eine lösbare Rastverbindung bilden, so daß die beiden Schenkel (30, 31) diametral dem Verbindungssteg (38) gegenüberliegend geöffnet und verschlossen werden können.

2. Einrichtung nach Anspruch 1, dadurch gekennzeichnet, daß sich nahe der Rastverbindung von Rastnase (33) und Rastnut (34) aus jedem Schenkel (30, 31) je ein Flachsteg (42) in der Ebene des Grundkörpers (23) des Verbindungselements (16) radial nach außen erstreckt, die jeweils in einem senkrecht dazu verlaufenden Raststeg (24) übergehen und an ihrem dem Flachsteg (42) abgewandten Ende Schnapphaken (25) aufweisen, die jeweils zum gegenüberliegenden Raststeg (24) gerichtet sind.

3. Einrichtung nach Anspruch 1, dadurch gekennzeichnet, daß sich nahe der Rastverbindung von Rastnase (33) und Rastnut (34) aus jedem Schenkel (30, 31) je ein Flachsteg (42) in der Ebene des Grundkörpers (23) des Verbindungselements (16) radial nach außen erstreckt, wobei sich an einen Flachsteg (42) senkrecht dazu ein Raststeg (24) anschließt, der an seinem dem Flachsteg (42) abgewandten Ende eine Rastöse (43) aufweist, die zentral über den beiden Flachstegen (42) angeordnet ist.

4. Einrichtung nach Anspruch 1, dadurch gekennzeichnet, daß sich nahe der Rastverbindung von Rastnase (33) und Rastnut (34) aus einem Schenkel (30, 31) ein Flachsteg (42) in der Ebene des Grundkörpers (23) des Verbindungselements (16) radial nach außen erstreckt, wobei sich an den Flachsteg (42) senkrecht dazu ein Raststeg (24) anschließt, der an seinem dem Flachsteg (42) abgewandten Ende mittig eine Rastöse (43) aufweist.

5. Einrichtung nach Anspruch 1, dadurch gekennzeichnet, daß sich um jeweils 90° versetzt von dem Verbindungssteg (38) und der Rastverbindung von Rastnase (33) und Rastnut (34) an den Schenkeln (30, 31) des Grundkörpers (23) an dessen Umfang Rastelemente (24', 25') befinden, die von senkrecht aus der Ebene des Grundkörpers (23) emporstehenden Raststegen (24') und von an den dem Grundkörper (23) abgewandten Enden ausgeformten Schnapphaken (25') gebildet werden.

6. Einrichtung nach einem der Ansprüche 1 bis 5, dadurch gekennzeichnet, daß die innere Öffnung (22) des Grundkörpers (23) kreisförmig ist, jedoch wenigstens eine Abflachung (40) aufweist, die mit wenigstens einer in der Nut (17) am Ende (12) des Einspritzventils (1) vorgesehenen Abflachung korrespondiert und somit eine Verdrehsicherung bildet.

7. Einrichtung nach Anspruch 6, dadurch gekennzeichnet, daß die Abflachung (40) der Öffnung (22) parallel zum Verbindungssteg (38) in beiden Schenkeln (30, 31) vorgesehen ist.

8. Einrichtung nach einem der Ansprüche 2 bis 5, dadurch gekennzeichnet, daß die Raststege (24, 24'), die Flachstege (42) und die Rastösen (43) einen quadratischen Querschnitt aufweisen.

9. Einrichtung nach Anspruch 1, dadurch gekennzeichnet, daß der Anschlußstutzen (19) wenigstens eine Fixiernase (20) besitzt, die sich radial nach außen vom Anschlußstutzen (19) erhebt und trapezförmig oder rechteckförmig ist.

10. Einrichtung nach Anspruch 1, dadurch gekennzeichnet, daß die Fixiernase (20) zwei äußere flache, radial nach außen zeigende, parallel zueinander verlaufende Nasenflanken (49) besitzt, zwischen denen eine Zunge (50) liegt, die eine weniger große radiale Ausdehnung hat als die Nasenflanken (49).

11. Einrichtung nach Anspruch 1, dadurch gekennzeichnet, daß das Verbindungselement (16) als ein Kunststoffclip ausgeführt ist.

## Claims

1. Fuel injection device for internal combustion engines with a fuel distributor device which has at least one pipe connector (19), with at least one injection valve (1) which is inserted with its inflow-side, upstream end (12) into a receptacle (13) of the pipe connector (19) and has a longitudinal valve axis (5), a circumferential groove (17) being provided upstream of the pipe connector (19) at the inflow-side end (12) of the injection valve (1), into which groove (17) a connecting element (16) engages which extends with a base element (23) perpendicularly to the longitudinal axis (5) of the valve and in addition has at least one locking element (24, 24', 25, 25', 43) in the direction of the longitudinal axis (5) of the valve, which locking element in turn carries out, together with a fixing lug (20) which is formed on the pipe connector (19) as a corresponding connecting component, engagement or locking, as a result of which axial fixing in position of the injection valve (1) with respect to the pipe connector (19) is obtained, and the base element (23) of the connecting element (16) being of disc-shaped construction with an inner opening (22) and with two legs (30, 31) which surround the opening (22) and are connected to one another on one side of the base element (23) by a narrow connecting web (38), characterized in that one of the legs (30) has a locking lug (33) offset by 180° from the connecting web (38) and the other leg (31) has a locking groove (34) offset by 180° from the connecting web (38), the said locking elements (33, 34) forming a detachable locking connection so that the two legs (30, 31) can be opened and closed diametrically opposite the connecting web (38).

2. Device according to Claim 1, characterized in that, near to the locking connection of the locking lug (33) and locking groove (34), in each case one flat web (42) extends radially outwards from each leg (30, 31) in the plane of the base element (23) of the connecting element (16), which flat webs merge in each case into a locking web (24) which runs perpendicular thereto, and have at their end facing away from the flat web (42) snap-fit hooks (25) which are each directed to the locking web (24) lying opposite.

3. Device according to Claim 1, characterized in that, near to the locking connection between the locking lug (33) and locking groove (34), in each case one flat web (42) extends radially outwards from each leg (30, 31) in the plane of the base element (23) of the connecting element (16), a locking web (24) adjoining a flat web (42) perpendicularly thereto and having at its end facing away from the flat web (42) a locking eyelet (43) which is arranged centrally over the two flat webs (42).

4. Device according to Claim 1, characterized in that, near to the locking connection between the locking lug (33) and locking groove (34), a flat web (42) extends radially outwards from a leg (30, 31) in the plane of the base element (23) of the connecting element (16), a locking web (24) adjoining the flat web (42) perpendicularly thereto and having in the centre a locking eyelet (43) at its end facing away from the flat web (42).

5. Device according to Claim 1, characterized in that locking elements (24', 25') are located on the circumference of the base element (23) offset in each case by 90° from the connecting web (38) and the locking connection of the locking lug (33) and locking groove (34) on the legs (30, 31) of the said base element (23), the said locking elements (24', 25') being formed by locking webs (24') which project upwards perpendicularly from the plane of the base element (23) and by snap-fit hooks (25') which are formed on the ends facing away from the base element (23).

6. Device according to one of Claims 1 to 5, characterized in that the inner opening (22) of the base element (23) is circular but has at least one flattened portion (40) which corresponds to at least one flattened portion which is provided in the groove (17) at the end (12) of the injection valve (1) and thus forms an anti-rotation protection.

7. Device according to Claim 6, characterized in that the flattened portion (40) of the opening (22) is provided parallel to the connecting web (38) in both legs (30, 31).

8. Device according to one of Claims 2 to 5, characterized in that the locking webs (24, 24'), the flat webs (42) and the locking eyelets (43) have a quadratic cross-section.

9. Device according to Claim 1, characterized in that the pipe connector (19) has at least one fixing lug (20) which rises radially outwards from the pipe connector (19) and is trapezoidal or rectangular.

10. Device according to Claim 1, characterized in that the fixing lug (20) has two outer flat, radially outwardly pointing lug edges (49) which run parallel to one another and between which there is a tongue (50) which has a smaller radial extent than the lug edges (49).

11. Device according to Claim 1, characterized in that the connecting element (16) is realized as a plastic clip.

## Revendications

1. Dispositif d'injection de carburant pour moteurs à combustion interne avec un dispositif de distribution du carburant, qui présente au moins un ajutage de raccordement (19), avec au moins un injecteur (1), qui est inséré par son extrémité située du côté de l'alimentation en amont (12) dans un logement (13) de l'ajutage de raccordement (19) et a un axe longitudinal (5), alors qu'en aval de l'ajutage de raccordement (10) à l'extrémité (12), située du côté de l'alimentation, de l'injecteur (1) il est prévu une rainure (17), qui fait tout le tour, dans laquelle vient en prise un élément de liaison (16), qui s'étend avec un corps de base (23) perpendiculairement à l'axe longitudinal de l'injecteur (5) et a en outre au moins un élément d'encliquetage (24, 24', 25, 25', 43) dans la direction de l'axe longitudinal de l'injecteur, élément qui à son tour en même temps qu'un nez de fixation (20) formé sur l'ajutage de raccordement (19) assure en tant que pièce de liaison correspondante un verrouillage ou un encliquetage, grâce à quoi l'on obtient une fixation axiale de la position de l'injecteur (1) par rapport à l'ajutage de raccordement (19), le corps de base (23) de l'élément de liaison (16) étant constitué sous la forme d'un disque avec une ouverture intérieure (22) et avec deux branches latérales (30, 31), qui entourent l'ouverture (22), branches latérales (30, 31) qui sont reliées l'une à l'autre sur un côté du corps de base (23) par une mince entretoise de liaison (38),
caractérisé en ce que
l'une des branches latérales (30) présente de façon décalée à 180° par rapport à l'entretoise de liaison (38) un nez d'encliquetage (33) et l'autre branche latérale (31) présente de façon décalée à 180° par rapport à l'entretoise de liaison (38) une rainure d'encliquetage (34), qui constituent une liaison d'encliquetage amovible, de telle sorte que les deux branches latérales (30, 31) puissent être ouvertes et fermées au point diamétralement opposé à l'entretoise de liaison (38).

2. Dispositif selon la revendication 1,
caractérisé en ce que
respectivement un bras plat (42) s'étend dans le plan du corps de base (23) de l'élément de liaison (16), radialement vers l'extérieur, à partir de chaque branche latérale (30, 31), à proximité de la liaison d'encliquetage se composant du nez d'encliquetage (33) et de la rainure d'encliquetage (34), bras plats (42) qui se transforment respectivement en des branches d'encliquetage (24) s'étendant perpendiculairement à ceux-ci, qui présentent à leur extrémité située àl'opposé du bras plat (42) des crochets d'enclenchement, qui sont respectivement orientés en direction de la branche d'encliquetage opposée (24).

3. Dispositif selon la revendication 1,
caractérisée en ce que
à proximité de la liaison d'encliquetage qui se compose du nez d'encliquetage (33) et de la rainure d'encliquetage (34) il s'étend à partir de chaque branches latérales (30, 31) respectivement un bras plat (42) dans le plan du corps de base (23) de l'élément de liaison (16) radialement vers l'extérieur, une branche d'encliquetage (24) se raccordant à un bras plat (42) perpendiculairement à celui-ci, branche d'encliquetage (24) qui présente à son extrémité située à l'opposé du bras plat (42) un oeillet d'encliquetage (43), qui est disposé au centre au dessus des deux bras plats (42).

4. Dispositif selon la revendication 1,
caractérisé en ce qu'
un bras plat (42) s'étend à partir d'une branche latérale (30, 31) dans le plan du corps de base (23) de l'élément de liaison (16) radialement vers l'extérieur à proximité de la liaison d'encliquetage, qui se compose du nez d'encliquetage (33) et de la rainure d'encliquetage (34), une branche d'encliquetage (24) se raccordant au bras plat (42) perpendiculairement à celui-ci, en présentant à son extrémité située à l'opposé du bras plat (42) au centre un oeillet d'encliquetage (43) .

5. Dispositif selon la revendication 1,
caractérisé en ce que
des éléments d'encliquetage (24', 25') se trouvent sur le pourtour du corps de base (23) en étant respectivement décalés de 90° par rapport à l'entretoise de liaison (38) et à la liaison d'encliquetage, qui se compose du nez d'encliquetage (33) et de la rainure d'encliquetage (34), sur les branches latérales (30, 31) du corps de base (23), éléments d'encliquetage (24', 25') qui sont constitués par des branches d'encliquetage (24') s'élevant perpendiculairement à partir du plan du corps de base (23) et par des crochets d'enclenchement (25'), qui sont formés sur les extrémités situées à l'opposé du corps de base (23).

6. Dispositif selon l'une des revendications 1 à 5,
caractérisé en ce que
l'ouverture intérieure (22) du corps de base (23) a une forme circulaire, mais présente toutefois au moins un méplat (40), qui correspond à au moins un méplat prévu dans la rainure (17) à l'extrémité (12) de l'injecteur (1) et forme de cette façon un blocage contre toute rotation.

7. Dispositif selon la revendication 6,
caractérisé en ce que
le méplat (40) de l'ouverture (22) est prévu parallèlement à l'entretoise de liaison (38) dans les deux branches latérales (30, 31).

8. Dispositif selon l'une des revendications 2 à 5,
caractérisé en ce que
les branches d'encliquetage (24, 24'), les bras plats (42) et les oeillets d'encliquetage (43) présentent une section transversale carrée.

9. Dispositif selon la revendication 1,
caractérisé en ce que
l'ajutage de raccordement (19) possède au moins un nez de fixation (20), qui se soulève radialement vers l'extérieur de l'ajutage de raccordement (19) et a une forme trapézoïdale ou rectangulaire.

10. Dispositif selon la revendication 1,
caractérisé en ce que
le nez de fixation (20) possède deux autres brides de nez (49), plates, extérieures, orientées radialement vers l'extérieur, qui s'étendent parallèlement l'une à l'autre, entre lesquelles se trouve une languette (50), qui a une étendue radiale moins grande que les brides du nez (49).

11. Dispositif selon la revendication 1,
caractérisé en ce que
l'élément de liaison (16) est réalisé sous la forme d'un clip en matière plastique.
